# NEUE EUROPÄISCHE PATENTSCHRIFT

(11) **EP 1 897 365 B2**
(45) Veröffentlichungstag und Bekanntmachung des Hinweises auf die Entscheidung über den Einspruch: **12.12.2018**
(45) Hinweis auf die Patenterteilung: 29.10.2008
(21) Anmeldenummer: 05804634.3
(22) Anmeldetag: 21.11.2005
(51) Int. Cl.: H04N 5/335, H04N 5/225

(54) **KAMERAANORDNUNG MIT BILDSENSORABDICHTUNG GEGEN UMWELTEINFLÜSSE**
CAMERA ARRANGEMENT WITH AN IMAGE SENSOR SEALED FROM ENVIRONMENTAL INFLUENCES
SYSTEME DE CAMERA COMPRENANT UN ELEMENT D'ETANCHEITE DE CAPTEUR D'IMAGE QUI SERT DE PROTECTION CONTRE LES EFFETS DE L'ENVIRONNEMENT EXTERIEUR

(30) Priorität: 17.06.2005 DE 102005028144
(43) Veröffentlichungstag der Anmeldung: 12.03.2008
(73) Patentinhaber: ROBERT BOSCH GMBH, 70442 Stuttgart (DE)
(72) Erfinder: DROTLEFF, Hans-Georg, 71229 Leonberg (DE)
(86) Internationale Anmeldenummer: PCT/EP2005/056089
(87) Internationale Veröffentlichungsnummer: WO 2006/136208

(56) Entgegenhaltungen:
- EP-A2- 1 357 780
- WO-A-2004/047421
- DE-A1- 10 342 526
- DE-A1- 10 344 760
- DE-A1- 10 344 770
- US-A- 4 639 772
- US-B1- 6 683 298

## Beschreibung

Die Erfindung betrifft eine Kameraanordnung mit einer Bildsensorabdichtung gegen Umwelteinflüsse wie z.B. Staub, Wasser oder ähnliches. Derartige Kameraanordnungen werden in vielen Bereichen der Technik eingesetzt, beispielsweise in der Automobiltechnik als kleine und kompakte Überwachungskameras zur Überwachung z.B. eines Innen- oder Außenraums eines Kraftfahrzeugs.

### Stand der Technik

Bildsensoren werden im Stand der Technik üblicherweise zusammen mit der dafür vorgesehenen Optik in einem Bildsensormodul verbaut, um die Bildsensoren gegen Umwelteinflüsse wie Staub, Wasser etc. zu schützen. Üblicherweise wird ein Bildsensormodul dann mit einer zusätzlichen Ansteuer- und Auswerteelektronik in einem zusätzlichen, d.h. in der Regel vom Außengehäuse verschiedenen Gehäuse, typischerweise einem Kameragehäuse, verbaut.

Die Einhaltung der meist engen mechanischen Toleranzketten und Anforderungen an die Oberflächengüte dieses Bildsensormoduls spielen eine wesentliche Rolle für die oft sehr hohen Kosten dieses Bauteils und der gesamten Kamera. Oft werden Klebstoffe eingesetzt, um die Einzelteile wie Bildsensor, Gehäuse (Base Pakkage) und Optikmodul (z.B. ein Lens Barrel) und ähnliche Einzelteile zu verkleben oder mit Hilfe von Klebstoffen nach einer Fokussierung zu fixieren. Der Einsatz von Klebstoffen in der Fertigung führt jedoch immer wieder zu Beeinträchtigungen im optischen Bereich des Produkts.

Die DE 103 44 760 A1 zeigt ein optisches Modul mit einem Schaltungsträger, einem auf dem Schaltungsträger angeordneten gehäusten Halbleiterelement und einer Linseneinheit zum Projizieren von elektromagnetischer Strahlung auf das Halbleiterelement. Die Linseneinheit umfasst bevorzugt eine Linsenanordnung aus beispielsweise drei Linsen und einer Blende. Vorzugsweise sind die Linsen nebst ggf. Blende durch ihre geometrische Gestaltung eindeutig ausgerichtet, so dass einerseits keine weitere optische Justierung erforderlich ist.

Die DE 103 42 526 A1 beschreibt eine Kameraanordnung, welche eine Bildsensoreinheit umfasst, die über drei Befestigungsmittel mit einem Gehäuse verbunden ist. Als Befestigungsmittel werden dabei drei schraubbare Abstandsbolzen verwendet, die zur Einstellung der Fokussierung der Bildsensoreinheit und zur Durchführung eines Taumelausgleichs dienen. Die Bildsensoreinheit wird über Schrauben an einem Innengewinde der Abstandsbolzen befestigt. Die Schrauben fixieren gleichzeitig die Einstellung der Abstandsbolzen und dichten die Abstandsbolzen gegenüber dem Gehäuse ab.

Die DE 103 42 529 A1 beschreibt eine Kameraanordnung, welche eine Objektivaufnahme und ein Objektiv umfasst, die zusammen ein Kugelgelenk bilden. Alternativ oder zusätzlich weist die Objektivaufnahme drei ringförmige, konzentrisch angeordnete Führungsbahnen mit jeweils einem Gewindegang auf. In den Führungsbahnen liegt jeweils wenigstens ein Lager des Objektivs auf.

Diese aus dem Stand der Technik bekannten Anordnungen weisen jedoch in der Praxis zahlreiche Nachteile auf. So wird beispielsweise in beiden genannten Druckschriften ein separates, abgedichtetes Bildgebungsmodul offenbart, in welchem ein Bildgebungssensor eingebracht ist. Dieses Bildgebungsmodul wird anschließend in das Kameragehäuse eingebracht. Wie oben beschrieben, werden durch diese Mobilbauweise die Herstellungskosten der Kameraeinheit erheblich erhöht.

Weiterhin sind die im Stand der Technik offenbarten Verfahren zur Abdichtung eines Bildsensors in der Regel mit dem Einsatz von Klebstoffen verbunden. Wie oben ebenfalls erwähnt, ist dies jedoch in der Praxis von Nachteil, da Klebstoffe beispielsweise aufwändige Dosier- und Applikationsvorrichtungen erforderlich machen. Weiterhin birgt der Einsatz von Klebstoffen in der Produktion optischer Elemente die Gefahr einer Kontamination empfindlicher optischer Bauteile, beispielsweise des Bildgebungssensors, mit Klebstoffen. Dadurch wird die Ausbeute reduziert, und es treten oft erhebliche Qualitätsprobleme auf.

### Vorteile der Erfindung

Es wird daher eine Kameraanordnung vorgeschlagen, welche eine ausreichende mediendichte Abdichtung eines Bildsensors gegen Umwelteinflüsse wie Staub, Wasser etc. bietet und dabei die Nachteile der aus dem Stand der Technik bekannten Anordnungen vermeidet. Diese Kameraanordnung ist in Anspruch 1 dargestellt.

Die Kameraanordnung weist ein Außengehäuse und einen auf einem Elektronikträger aufgebrachten Bildsensor auf. Vorteilhafterweise (jedoch nicht notwendigerweise) ist unter einem Außengehäuse dabei ein Gehäuse zu verstehen, welches die Kameraanordnung gegen die Umgebung abschließt. Es können jedoch noch außerhalb des Außengehäuses zusätzliche Gehäuse oder Gehäusebauteile, beispielsweise Montagegehäuse zur Anbringung der Kameraanordnung beispielsweise im Innenraum eines Kraftfahrzeugs, vorgesehen sein. Die Ausgestaltung ist abhängig vom jeweiligen Einsatzgebiet.

Weitere Merkmale der Erfindung sind dem Anspruch 1 zu entnehmen.

Bei dem Bildsensor kann es sich um einen beliebigen, dem Fachmann bekannten Bildsensor oder eine Kombination von Bildsensoren handeln. Beispielsweise können hier CCD-Chips eingesetzt werden. Auch andere Arten von Bildsensoren sind jedoch möglich. Als Elektronikträger kann beispielsweise eine Leiterplatte eingesetzt werden. Vorteilhafterweise ist diese Leiterplatte mediendicht oder zumindest abschnittsweise mediendicht, so dass insbesondere keine Feuchtigkeit und/oder Staub durch den Elektronikträger hindurch dringen kann. Auf dem Elektronikträger können weiterhin elektronische Bauelemente, beispielsweise Bauelemente einer Ansteuer- und Auswerteelektronik, aufgebracht sein. Weiterhin können auch Steckverbindungskomponenten auf dem Elektronikträger aufgebracht sein. Das Außengehäuse muss den Elektronikträger nicht notwendigerweise umschließen.

Das Außengehäuse weist einen Optikabschnitt mit mindestens einer in den Optikabschnitt eingebrachten Bildgebungsoptik auf. Bei dieser Optik kann es sich beispielsweise um eine Kombination mehrerer optischer Bauelemente handeln, beispielsweise um ein Objektiv englisch: Lens). Der Optikabschnitt wirkt somit gleichzeitig als Objektivhalter (englisch: Lens Holder). Die einsetzbaren Bildgebungsoptiken sind dem Fachmann bekannt. Beispielsweise kann die Bildgebungsoptik ein integriertes, beispielsweise im Wesentlichen zylinderförmiges, Optikbauteil sein (z.B. ein so genanntes "Lens Barrel").

Ein Grundgedanke der vorliegenden Erfindung besteht darin, dass der Optikabschnitt des Außengehäuses mediendicht gegen den Elektronikträger abdichtet. Dabei entsteht ein den Bildsensor aufnehmender mediendichter Sensorraum. Im Gegensatz zu aus dem Stand der Technik bekannten Anordnungen, ist der Bildsensor bei der erfindungsgemäßen Kameraanordnung also über den Elektronikträger, beispielsweise die Leiterplatte, direkt gegen das Außengehäuse abgedichtet. Beispielsweise kann der Optikabschnitt halbschalenartig ausgebildet sein, wobei eine Öffnung der Halbschale dem Elektronikträger zuweist.

Zur Abdichtung kann beispielsweise mindestens ein zwischen dem Optikabschnitt und dem Elektronikträger angeordnetes Sensordichtungselement zur mediendichten Abdichtung des Sensorraums verwendet werden. Beispielsweise kann es sich dabei um eine Gummidichtung, z.B. einen Dichtungsring aus einem Elastomermaterial, handeln. Beispielsweise lässt sich ein Ethylen-Propylen-Terpolymer-Kautschuk (EPDM) einsetzen. Es können jedoch auch mehrere Dichtungselemente vorgesehen sein, also beispielsweise Kombinationen mehrerer Gummidichtungen.

Weiterhin kann die Kameraanordnung erfindungsgemäß dahingehend weitergebildet werden, dass mindestens ein Optikdichtungselement zur Abdichtung zwischen dem Optikabschnitt und der in den Optikabschnitt eingebrachten Bildgebungsoptik vorgesehen ist. Beispielsweise kann es sich dabei wieder um einen Gummidichtungsring oder eine Kombination mehrerer Dichtungselemente handeln. Beispielsweise kann die Bildgebungsoptik in den Optikabschnitt eingeschraubt oder eingepresst sein, wobei das mindestens eine Optikdichtungselement zusammengepresst wird und wobei eine Abdichtung entsteht. Auf diese Weise wird verhindert, dass entlang der Verbindung zwischen Bildgebungsoptik und Optikabschnitt Medien wie beispielsweise Luftfeuchtigkeit, Staub oder Wasser in den Sensorraum eindringen können.

In einer vorteilhaften Weiterbildung der Erfindung sind ein Sensordichtungselement zur mediendichten Abdichtung zwischen Optikabschnitt und Elektronikträger sowie ein Optikdichtungselement zur Abdichtung zwischen Optikabschnitt und der in den Optikabschnitt eingebrachten Bildgebungsoptik vorgesehen. Vorteilhafterweise sind dabei Sensordichtungselement und Optikdichtungselement als einstückiges Dichtungselement ausgebildet. Dies spart Bauteilkosten und Produktionsschritte.

Beispielsweise kann das Dichtungselement einen rechtwinklig ausgestalteten Dichtungskörper, mindestens einen ersten Dichtungsbereich zur Abdichtung zwischen dem Optikabschnitt und Elektronikträger und mindestens einen zweiten Dichtungsbereich zur Abdichtung zwischen Optikabschnitt und Bildgebungsoptik aufweisen.

Vorteilhafterweise sind der Elektronikträger und das Außengehäuse mittels mindestens eines mechanischen Verbindungselements mechanisch fest verbunden. Vorteilhafterweise erfolgt diese mechanisch feste Verbindung durch Schraubenelemente, wobei die Schraubenelemente vorteilhaft außerhalb des Sensorraums angeordnet sind. Auf diese Weise kann der Sensorraum vom Volumen her möglichst klein gehalten werden. Insgesamt ist es von Vorteil, wenn der Sensorraum im Vergleich zum gesamten Kameravolumen einen möglichst kleinen Raum aufweist. Dabei kann das Volumen des Sensorraums in ähnlich kleinen Dimensionen gehalten werden wie bei herkömmlichen Systemen, so dass durch die Ausbildung des Sensorraums kein Nachteil bezüglich des Raumbedarfs entsteht.

Vorteilhafterweise wird der Sensorraum derart ausgebildet, dass die Abdichtung des Sensorraums gegen die Umgebung klebstofffrei erfolgt. Zu diesem Zweck ist insbesondere die Abdichtung des Optikabschnitts gegen den Elektronikträger vorteilhafterweise klebstofffrei, sowie auch die Abdichtung des Optikabschnitts gegen die Bildgebungsoptik. Alternativ kann jedoch auch ein Klebstoff zusätzlich eingebracht werden, wobei jedoch dieser Klebstoff vorzugsweise außerhalb der genannten Dichtungselemente eingesetzt wird und somit nicht in den Sensorraum eindringen kann. Auf diese Weise lässt sich eine zusätzliche Versiegelung des Sensorraums erzielen.

Die Kameraanordnung in einer ihrer Ausgestaltungen weist gegenüber aus dem Stand der Technik bekannten Vorrichtungen zahlreiche Vorteile auf. So kann mittels der vorgeschlagenen Kameraanordnung auf den Aufbau eines separaten Bildsensormoduls, welches in das Kameragehäuse eingebracht wird, verzichtet werden. Weiterhin kann, wie oben beschrieben, auf Klebstoffe verzichtet werden, was Herstellungskosten senkt und Qualitätsprobleme durch Kontamination optischer Komponenten mit Klebstoffen vermeidet.

Weiterhin kann ein Produktgehäuse einer Kamera durch Verwendung der erfindungsgemäßen Kameraanordnung in zwei Bereiche eingeteilt werden. Ein erster Bereich ist dabei der im wesentlichen mediendichte Sensorraum, welcher optikrelevante Komponenten aufnehmen kann, wie beispielsweise Bildgebungsoptik und Bildsensor. Auch andere empfindliche Komponenten, beispielsweise empfindliche Elektronikkomponenten, können hier angeordnet werden. Der zweite Bereich ist ein nicht notwendigerweise mediendichter Bereich, in welchem beispielsweise Steckverbindungen angeordnet werden können, deren Abdichtung nicht erforderlich ist oder nur schwer realisierbar ist. Auf diese Weise können die Anforderungen an die Mediendichtigkeit des gesamten Kameraprodukts auf den optikrelevanten Sensorraum reduziert werden. Im Steckerbereich können hingegen günstigere Bauteile eingesetzt werden, welche keinen hohen Anforderungen an die Dichtigkeit genügen müssen.

Das Volumen des mediendichten Sensorraums kann trotz eines Verzichts auf eine modulare Bauweise sehr klein gehalten werden. Dies begünstigt eine Abdichtung und senkt somit die Herstellungskosten der Kamera. Insbesondere lässt sich dies, wie oben beschrieben, durch ein einstückiges Dichtungselement realisieren.

Ein weiterer Vorteil der erfindungsgemäßen Ausgestaltung der Kameraanordnung, insbesondere wenn ein Optikdichtungselement eingesetzt wird, besteht darin, dass aufgrund der konstruktiv einstellbaren Reibungskraft zwischen Bildgebungsoptik (z. B. dem Lens Barrel) und Optikabschnitt eine zusätzliche Fixierung der Bildgebungsoptik entfallen kann. So muss beispielsweise bei Verwendung eines Gewindes zum Einschrauben der Bildgebungsoptik in den Optikabschnitt zur Justage und Fokussierung der Bildgebungsoptik lediglich ein geringfügig höheres Drehmoment auf die Bildgebungsoptik aufgebracht werden. Somit kann beispielsweise das Optikdichtungselement gleichzeitig auch die Aufgabe der Fixierung der Bildgebungsoptik übernehmen, wodurch Verfahrensschritte und damit Kosten bei der Herstellung eingespart werden können.

Die Bauweise und Integration des mediendichten Sensorraums lässt sich weiter produktionstechnisch optimieren, beispielsweise indem das mindestens eine Sensordichtungselement bis in den Randbereich des Elektronikträgers verlagert wird. Auf diese Weise kann beispielsweise der Elektronikträger unmittelbar über eine ohnehin in der Regel erforderliche Verschraubung zwischen einzelnen Gehäuseelementen mit einem Produktgehäuse der Kamera verbunden werden. Auf diese Weise lassen sich zusätzliche Leiterplattenschrauben zur Fixierung des Elektronikträgers am Außengehäuse einsparen.

### Zeichnung

Anhand der Zeichnung wird die Erfindung nachstehend näher erläutert.

Es zeigt:
Figur 1 einen Ausschnitt eines ersten Ausfiihrungsbeispiels einer Kameraanordnung;
Figur 2 ein zweites Ausführungsbeispiel einer Kameraanordnung mit einem Steckverbinder;
Figur 3 einen Ausschnitt eines bevorzugten, dritten Ausführungsbeispiels einer Kameraanordnung mit einem einstückigen Dichtungselement;
Figur 4 ein viertes Ausführungsbeispiel einer Kameraanordnung;
Figur 5 ein illustratives Beispiel der Durchbiegung des Elektronikträgers im Ausführungsbeispiel gemäß Figur 3;.
Figur 6 ein erstes Ausführungsbeispiel einer Kameraanordnung mit einem Anpresselement zur Lösung der Durchbiegungsproblematik;
Figur 7 ein zweites Ausführungsbeispiel einer Kameraanordnung mit einem Anpresselement;
Figur 8 ein Ausführungsbeispiel eines Anpresselements in Form einer Ringbrücke; und
Figur 9 ein drittes Ausführungsbeispiel einer Kameraanordnung mit einem Anpresselement.

### Ausführungsbeispiele

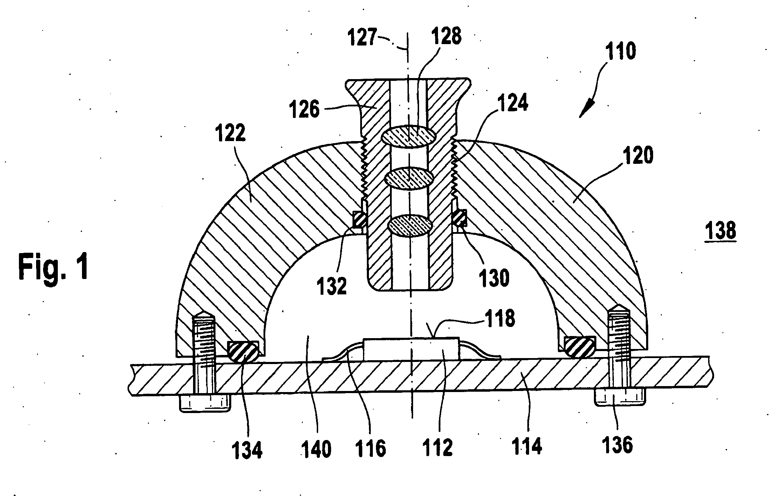

In Figur 1 ist ein Ausschnitt eines ersten Ausführungsbeispiels einer Kameraanordnung 110 dargestellt. Die Kameraanordnung weist einen Bildsensor 112 auf, welcher auf einen Elektronikträger 114 in Form einer Leiterplatte aufgebracht ist. Der Bildsensor 112, bei welchem es sich in diesem Ausführungsbeispiel beispielsweise um einen CCD-Chip handeln kann, ist über elektrische Kontakte 116 mit Leiterbahnen (nicht dargestellt) auf dem Elektronikträger 114 verbunden. Der Bildsensor 112 weist eine Sensoroberfläche 118 auf, welche in diesem Ausführungsbeispiel nach oben, also vom Elektronikträger 114 weg weist. Die Sensoroberfläche 118 ist empfindlich gegenüber Einflüssen von Umgebungsmedien, insbesondere gegenüber Staub, Feuchtigkeit und Spritzwasser oder mechanischen Einwirkungen.

Weiterhin weist die Kameraanordnung 110 in diesem Ausführungsbeispiel ein Außengehäuse 120 auf, welches in diesem einfachen Ausführungsbeispiel ein Optikabschnitt 122 ist. Dieser Optikabschnitt 122 ist als im wesentlichen halbkugelförmige Halbschale ausgebildet, welche zum Elektronikträger 114 hin geöffnet ist.

Über ein Gewinde 124 ist in den Optikabschnitt 122 eine Bildgebungsoptik 126 mit einer optischen Achse 127 eingeschraubt. In diesem Ausführungsbeispiel ist die Bildgebungsoptik 126 als so genanntes "Lens Barrel" ausgestaltet, also als integriertes Objektiv, in welchem einzelne Linsenelement 128 aufgenommen und zueinander justiert sind. Auch weitere optische Elemente, wie beispielsweise Filter oder Korrekturelemente, können in der Bildgebungsoptik 126 vorgesehen sein. Mittels des Gewindes 124 kann eine Fokussierung der Bildgebungsoptik 126 vorgenommen werden.

Zwischen Bildgebungsoptik 126 und Optikabschnitt 122 ist weiterhin ein Optikdichtungselement 130 vorgesehen. Das Optikdichtungselement 130 ist in diesem Fall als O-Ring ausgeführt, welcher in einer Aussparung 132 des Optikabschnitts 122 aufgenommen ist. Beim Einschrauben der Bildgebungsoptik 126 in das Gewinde 124 des Optikabschnitts 122 wird dieses Optikdichtungselement 130 elastisch verformt, wodurch eine mediendichte Verbindung zwischen Bildgebungsoptik 126 und Optikabschnitt 122 entsteht. Auf diese Weise wird verhindert, dass beispielsweise Feuchtigkeit entlang der Bildgebungsoptik 126 durch das Gewinde 124 zum Bildsensor 112 gelangen kann. Weiterhin kann das Optikdichtungselements 130 auch als Justageelement zur Fixierung der Bildgebungsoptik 126 übernehmen (siehe oben).

Zwischen Optikabschnitt 122 und Elektronikträger 114 ist weiterhin in diesem Ausführungsbeispiel ein Sensordichtungselement 134 vorgesehen. Dieses Sensordichtungselement 134 ist hier beispielsweise ebenfalls als O-Ring ausgestaltet und verhindert, dass Umgebungsmedien, wie beispielsweise Staub, Luftfeuchtigkeit oder Spritzwasser entlang der Verbindung zwischen Elektronikträger 114 und Optikabschnitt 122 zum Bildsensor 112 gelangen können.

Elektronikträger 114 und Optikabschnitt 122 sind durch Schrauben 136 miteinander verbunden. Diese Schrauben sind außerhalb des Sensordichtungselements 134 angeordnet. Beim Verschrauben zwischen Optikabschnitt 122 und Elektronikträger 114 wird das Sensordichtungselement 134 zusammengepresst, was die Dichtwirkung des Sensordichtungselements 134 zusätzlich erhöht. Bei Verwendung von z. B. drei Schrauben 136 in einer 120°-Anordnung orthogonal zur optischen Achse der Bildgebungsoptik 126 kann durch unterschiedliches Anziehen der Schrauben 136 bzw. unterschiedlich starkes Zusammenpressen des Sensordichtungselements 134 auch eine Taumeltoleranz, insbesondere eine durch leicht verkippte Montage der Bildgebungsoptik 126 im Optikabschnitt 122 oder durch Bauteiltoleranzen verursachte Taumeltoleranz, ausgeglichen werden.

Insgesamt ist bei dieser Kameraanordnung 110 gemäß der Ausführung in Figur 1 somit die Kamera unterteilt in einen Umgebungsraum 138 und einen Sensorraum 140. Der Sensorraum 140 ist mediendicht abgeschlossen gegen den Umgebungsraum 138. Dabei erfolgt die mediendichte Ausbildung des Sensorraums 140 ohne Verwendung von Klebstoffen, welche auf die Sensoroberfläche 118 des Bildsensors 112 gelangen könnten.

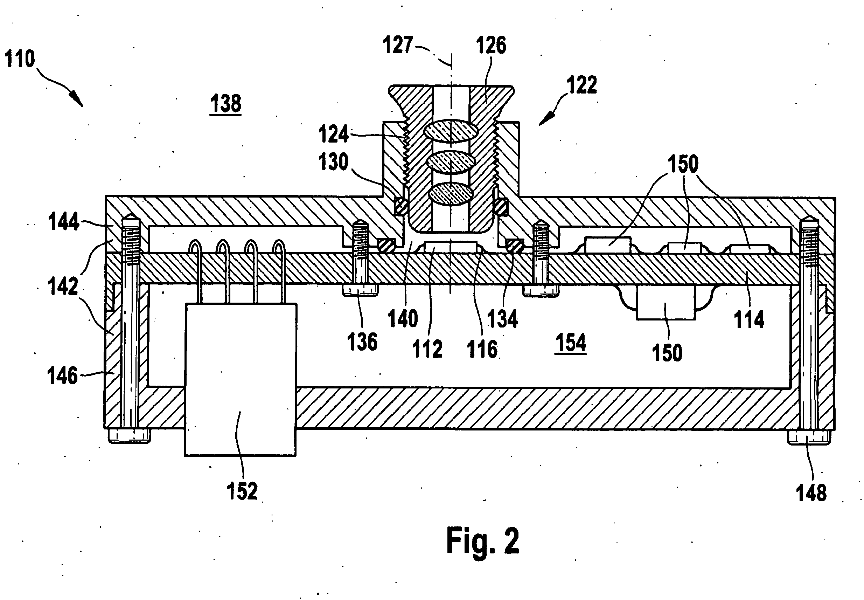

In Figur 2 ist ein zweites Ausführungsbeispiel einer Kameraanordnung 110 dargestellt. Die Kameraanordnung 110 weist in diesem Ausführungsbeispiel ein Produktgehäuse 142 auf. Das Produktgehäuse weist eine optikseitige Gehäusehalbschale 144 und eine steckerseitige Gehäusehalbschale 146 auf. Beide Halbschalen 144, 146 sind mit Gehäuseschrauben 148 miteinander verbunden.

Weiterhin weist die Kameraanordnung 110 in der Ausführung gemäß Figur 2 wiederum einen Elektronikträger 114 auf, welcher wieder als Leiterplatte ausgebildet ist. Der Elektronikträger 114 erstreckt sich in dieser Ausführung über die volle Breite des Produktgehäuses 142 und ist im Bereich des Gehäuseschrauben 148 zwischen die Gehäusehalbschalen 144, 146 eingeklemmt. Auf diese Weise erfolgt eine erste mechanische Fixierung des Elektronikträgers 114 relativ zum Produktgehäuse 142. Auf dem Elektronikträger 114 sind neben dem Bildsensor 112 weitere elektronische Bauelemente 150, beispielsweise elektronische Bauelemente einer Ansteuer- und Auswerteelektronik, aufgebracht. Auch Datenspeicher oder Computerbauelemente können vorgesehen sein. Weiterhin ist eine Steckverbindung 152 vorgesehen, mit welche von der steckerseitigen Gehäusehalbschale 146 her der Elektronikträger 114 kontaktiert werden kann.

Analog zur Ausführung in Figur 1 weist in Figur 2 das Produktgehäuse 142 einen Optikabschnitt 122 auf. Dieser Optikabschnitt ist winklig ausgeführt und weist wiederum ein Gewinde 124 zur Aufnahme einer Bildgebungsoptik 126 auf. Die Bildgebungsoptik 126 ist als Lens Barrel ausgeführt, welches relativ zum Bildsensor 112 durch Veränderung der Verschraubung mit dem Optikabschnitt 122 justiert werden kann, wodurch eine Fokussierung erzielt werden kann.

Analog zur Ausführung in Figur 1 weist auch die Kameraanordnung 110 in Figur 2 ein Optikdichtungselement 130 und ein Sensordichtungselement 134 auf. Funktionsweise und Anordnung dieser Dichtungselemente 130, 134 ist analog zur oben beschriebenen Ausführung. Wiederum ist der Elektronikträger 114 über Leiterplattenschrauben 136 mit dem Optikabschnitt 122 verbunden, wodurch eine mechanisch stabile Verbindung ausgebildet ist. Dadurch ist gewährleistet, dass sich die Lage des Bildsensors 112 relativ zum Optikabschnitt 122 nur noch unwesentlich verändern kann, so dass die Bildgebungsoptik 126 relativ zum Bildsensor 120 positioniert werden kann. Dadurch kann durch Einschrauben der Bildgebungsoptik 126 in das Gewinde 124 eine stabile Fokussierung erzielt werden.

Durch die mediendichte Verbindung zwischen Elektronikträger 114 und Optikabschnitt 122 des Produktgehäuses 142 ist wiederum ein mediendichter Sensorraum 140 ausgebildet. Dieser mediendichte Sensorraum 140 ist mediendicht abgeschlossen gegenüber dem Umgebungsraum 138 der Kameraanordnung 110. Weiterhin unterteilt die mediendichte Verbindung auch den Innenraum des Produktgehäuses 142 in zwei Teilräume: den Sensorraum 140 und einen Steckerraum 154. Im Steckerraum 154 sind Bauelemente wie elektronische Bauelemente 150 und Steckverbindungen 152 angeordnet, welche nicht den strengen Sauberkeits- und Trockenheitsanforderungen des Sensorraums 140 genügen müssen. Weiterhin bewirkt in diesem Ausführungsbeispiel auch die Erstreckung des Elektronikträgers 114 über die volle Breite des Produktgehäuses 142 eine zusätzliche Unterteilung des Steckerraums 154.

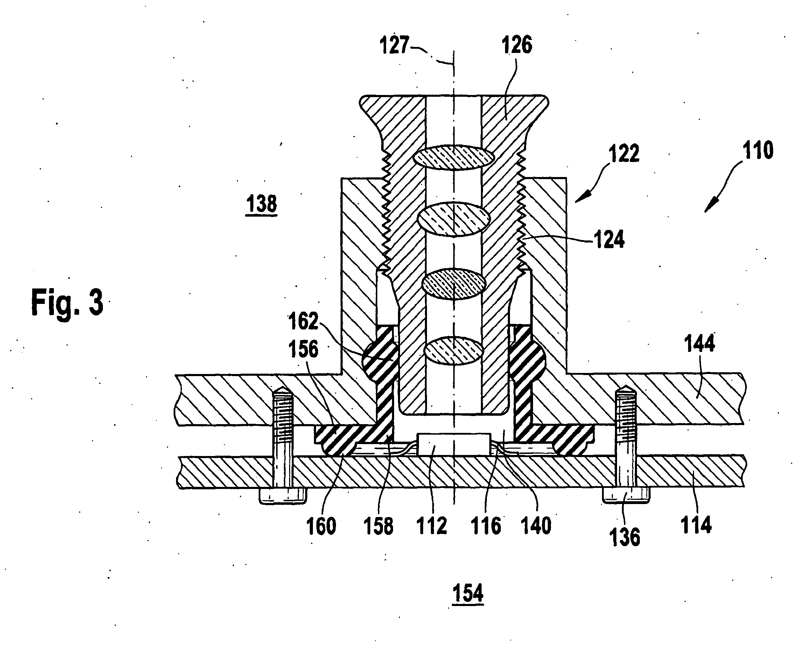

In Figur 3 ist ein Ausschnitt eines bevorzugten Ausführungsbeispiels einer Kameraanordnung 110 dargestellt. Dieses Ausführungsbeispiel unterscheidet sich vom Ausführungsbeispiel gemäß Figur 2 lediglich in der Ausgestaltung der Dichtungselemente 130, 134. Wiederum ist ein Optikabschnitt 122 vorgesehen, welcher, analog zur Ausführung in Figur 2, wiederum winklig ausgestaltet ist und ein Gewinde 124 aufweist. In das Gewinde 124 kann eine Bildgebungsoptik 126, beispielsweise wiederum in Form eines Lens Barrels, eingeschraubt werden. Der Optikabschnitt 122 ist über Leiterplattenschrauben 136 mit einem Elektronikträger 114 verbunden. Auf dem Elektronikträger 114 ist ein Bildsensor 112 aufgebracht.

In diesem bevorzugten Ausführungsbeispiel ist lediglich ein einzelnes, einstückiges Dichtungselement 156 zur Abdichtung des Sensorraums 140 vorgesehen. Dabei kann es sich beispielsweise um ein rotationssymmetrisches Gummidichtungselement oder Dichtungselement aus einem anderen Elastomermaterial oder einem anderen Kunststoff handeln. Das einstückige Dichtungselement 156 weist einen rechtwinklig ausgestalteten Dichtungskörper 158 auf sowie einen ersten Dichtungsbereich 160 und einen zweiten Dichtungsbereich 162. Beide Dichtungsbereiche 160, 162 können beispielsweise als umlaufende Wulste oder Verdickungen im Dichtungselement 156 ausgebildet sein. Der erste Dichtungsbereich 160 dient zur Abdichtung des Optikabschnitts 122 gegen den Elektronikträger 114, wohingegen der zweite Dichtungsbereich 162 zur Abdichtung des Optikabschnitts 122 gegen die Bildgebungsoptik 126 dient. Auf diese Weise ist durch das einstückige Dichtungselement 156 der Sensorraum 140 mediendicht gegen den Umgebungsraum 138 und gegen den Steckerraum 154 der Kameraanordnung 110 abgedichtet. Die einstückige Ausbildung des Dichtungselements 156 erleichtert die Positionierung des Dichtungselements 156, spart Handhabungsschritte und senkt somit die Herstellungskosten.

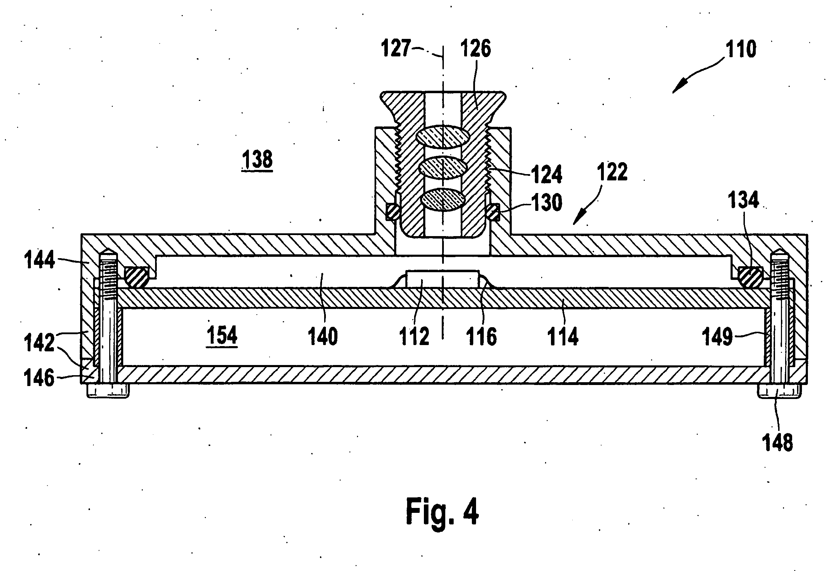

In Figur 4 ist schließlich ein viertes Ausführungsbeispiel einer Kameraanordnung 110 dargestellt, bei welchem der Sensorraum 140 sich über die volle Breite eines Produktgehäuses 142 erstreckt. Wiederum ist, analog zur Ausführung in Figur 2, das Produktgehäuse 142 in eine optikseitige Gehäusehalbschale 144 und eine steckerseitige Gehäusehalbschale 146 unterteilt. Beide Gehäusehalbschalen 144, 146 sind durch Gehäuseschrauben 148 miteinander verbunden. Wiederum erstreckt sich der Elektronikträger 114 dabei über die volle Breite des Produktgehäuses 142, so dass in diesem Ausführungsbeispiel die Gehäuseschrauben 148 auch den Elektronikträger 114 durchsetzen. Dadurch wird der Elektronikträger 114 relativ zum Produktgehäuse 142 vorfixiert. Zusätzlich zu den Gehäuseschrauben 148 können auch weitere Distanzhülsen 149 oder Distanzringe vorgesehen sein.

In diesem Ausführungsbeispiel ist das Sensordichtungselement 134 nahe der Gehäuseschrauben 148 angeordnet, also relativ weit von der Bildgebungsoptik 126 entfernt. Durch die Gehäuseschrauben 148 wird gleichzeitig auch das Sensordichtungselement 134 zusammengepresst, so dass hier eine Abdichtung des Sensorraums 140 gegen den Umgebungsraum 138 erfolgt. Weiterhin erstreckt sich auch der Optikabschnitt 122 im Wesentlichen über die volle Breite des Produktgehäuses 142. Analog zur Ausgestaltung in Figur 2, ist der Optikabschnitt 122 im Schnitt rechtwinklig ausgestaltet und weist ein Gewinde 124 zum Einschrauben einer Bildgebungsoptik 126 auf. Die Bildgebungsoptik 126, welche hier ebenfalls als Lens Barrel ausgestaltet ist, ist wieder durch ein Optikdichtungselement 130 gegen den Optikabschnitt 122 abgedichtet.

Die Anordnung des Sensordichtungselements 134 relativ weit außen am Rand des Produktgehäuses 142 bewirkt, dass der Sensorraum 140 in diesem Ausführungsbeispiel vergleichsweise groß ist. Weiterhin ist in diesem Ausführungsbeispiel auf die Leiterplattenschrauben 136 verzichtet werden. Somit über die Gehäuseschrauben 148 gleichzeitig auch die Funktion der Leiterplattenschrauben 136 aus und bewirken eine mechanisch feste Verbindung zwischen Elektronikträger 114 und Produktgehäuse 142. Auf diese Weise sind weitere Bauteile eingespart worden (nämlich die Leiterplattenschrauben 136), was zu einer zusätzlichen Verringerung der Produktionskosten führt und gleichzeitig die Ausbildung eines mediendichten Sensorraums 140 ermöglicht.

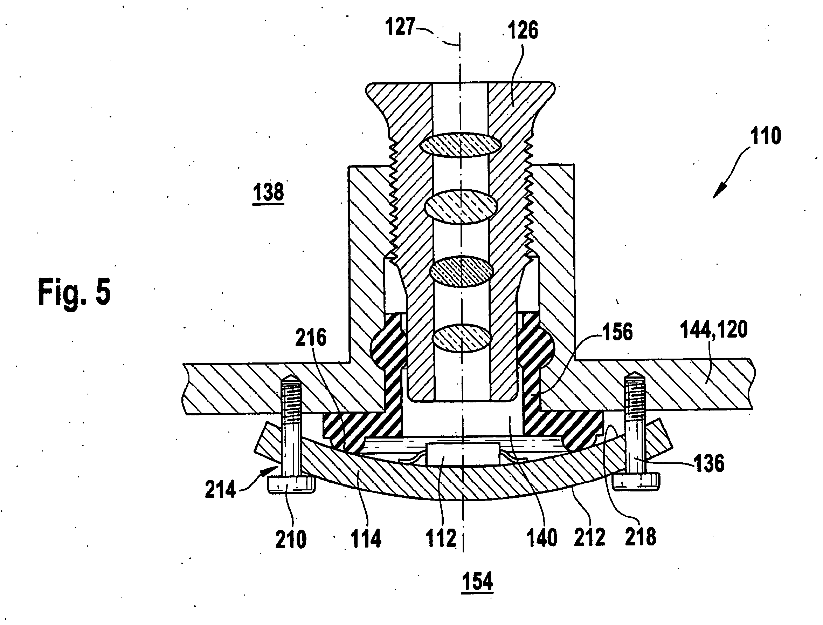

Die in den Figuren 1 bis 4 dargestellten Ausführungsbeispiele der Kameraanordnung 110 haben sich in der Praxis gut bewährt, um den Bildsensor gegenüber Umwelteinflüssen zu schützen. Dabei hat sich jedoch gezeigt, dass in vielen Fällen bei der Montage der Kameraanordnung 110, insbesondere bei einer Verschraubung des Elektronikträgers 114. mit dem Außengehäuse 120, mechanische Spannungen auftreten können. Diese Problematik ist in Figur 5 im Prinzip dargestellt. Die in Figur 5 als Beispiel gezeigte Kameraanordnung 110 entspricht im Wesentlichen der Kameraanordnung 110 gemäß Figur 3. Es sei darauf hingewiesen, dass die Problematik und das nachfolgend gezeigte Prinzip sich jedoch auch auf die anderen Ausführungsbeispiele übertragen lassen.

Bei dem Ausführungsbeispiel gemäß Figur 3 wird der Elektronikträger 114 über die Leiterplattenschrauben 136 mit der optikseitigen Gehäusehalbschale 144 verschraubt. Dabei üben die Schraubenköpfe 210 von der der Bildgebungsoptik 126 abgewandten Seite 212 des Elektronikträgers 114 hier einen Druck auf den Elektronikträger 114 in den Verschraubungsbereichen 214 aus. Gleichzeitig drückt das Dichtungselement 156 in den Dichtbereichen 216 auf der der Bildgebungsoptik 126 zugewandten Seite 218 auf den Elektronikträger 114. Da die Dichtbereiche 216 und die Verschraubungsbereiche 214 einander nicht gegenüberliegen und somit unterschiedliche Abstände von der optischen Achse 127 aufweisen, wird ein Biegemoment erzeugt, welches Ursache für Spannungen auf dem Elektronikträger 114 sein kann. Eine derartige Durchbiegung des Elektronikträgers 114 ist in Figur 5 übertrieben dargestellt.

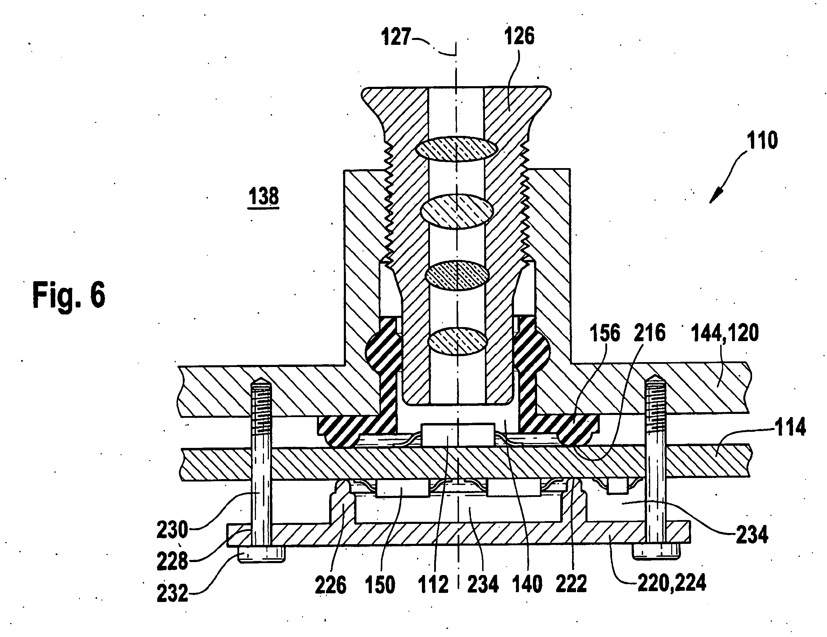

In den Figuren 6, 7 und 9 sind Ausführungsbeispiele einer erfindungsgemäßen Kameraanordnung 110 dargestellt, welche die in Figur 5 beschriebene Problematik verringern oder vermeiden, indem ein oder mehrere Anpresselemente 220 eingesetzt werden. Das Anpresselement 220 ist jeweils auf der der Bildgebungsoptik 126 abgewandten Seite 212 des Elektronikträgers 114 angeordnet und ist derart mit dem Außengehäuse 120 verbunden, dass das Anpresselement 220 rückseitig gegen den Elektronikträger 114 gepresst wird. Dies erfolgt derart, dass minimale, im Idealfall sogar verschwindende, Biegemomente auf den Elektronikträger 114 ausgeübt werden. Die Grundidee besteht dabei darin, Kontaktbereiche 222, in welchen auf der der Bildgebungsoptik 126 abgewandten Seite 212 Druck auf den Elektronikträger 114 ausgeübt wird, derart zu verschieben, dass diese den Dichtbereichen 216 auf der der Bildgebungsoptik 126 zugewandten Seite 218 gegenüberliegen. Auf diese Weise wird vom Außengehäuse 120 ein Druck auf den Elektronikträger 114 übertragen, so dass sich die Biegemomente insgesamt gegenseitig aufheben. Auch andere Möglichkeiten zur Minimierung bzw. Eliminierung von Biegemomenten sind denkbar, beispielsweise wenn sich Kontaktbereiche 222 und Dichtbereiche 216 zwar nicht exakt gegenüberliegen, sich die ausgeübten Biegemomente jedoch über eine kurze Distanz gegenseitig aufheben (d.h. über eine Distanz, welche beispielsweise klein ist gegenüber dem Abstand der Dichtbereiche 216 zum Bildsensor 112).

In Figur 6 ist das Dichtungselement 156 ringförmig ausgestaltet und ist somit rotationssymmetrisch um die optische Achse 127. Dementsprechend bietet es sich an, auch das Anpresselement 220 in diesem Ausführungsbeispiel rotationssymmetrisch auszugestalten. In diesem Ausführungsbeispiel wurde das Anpresselement 220 in Form einer Ringbrücke 224 ausgebildet. Diese Ringbrücke weist (ebenfalls in diesem Ausführungsbeispiel ringförmige) Druckübertragungselemente 226 auf, welche in den Kontaktbereichen 222 auf den Elektronikträger 114 drücken. Da somit sowohl die Dichtbereiche 216 als auch die Kontaktbereiche 222 als ringförmige, um die optische Achse 127 rotationssymmetrische Bereiche gleichen Durchmessers ausgestaltet sind, werden die Biegemomente auf den Elektronikträger 114 insgesamt gegeneinander aufgehoben. Spannungen werden somit konstruktiv von dem Elektronikträger 114 in die Ringbrücke 224 verlagert. Um das Anpresselement 220 mit dem Außengehäuse 120, in diesem Fall mit der optikseitigen Gehäusehalbschale 144, zu verbinden, weist die Ringbrücke 224 im Ausführungsbeispiel gemäß Figur 6 in ihren Randbereichen Bohrungen 228 auf. Durch diese Bohrungen 228 werden Schrauben 230 geführt, welche den Elektronikträger 114 durchsetzen und welche in die optikseitige Gehäusehalbschale 144 eingeschraubt werden. Auf diese Weise wird über die Schraubenköpfe 232 eine Kraft auf das Anpresselement 220 übertragen, welche wiederum über die Druckübertragungselemente 226 auf den Elektronikträger 114 übertragen wird. Auf diese Weise wird der Elektronikträger 114 gegen das Dichtungselement 156 gepresst, und der Sensorraum 140 wird abgedichtet.

Die Ausgestaltung des Anpresselements 220 gemäß dem Ausführungsbeispiel in Figur 6 mit den Druckübertragungselementen 226 bewirkt, dass das Anpresselement 220 dem Elektronikträger 114 zugewandte Aussparungen 234 aufweist, anstatt großflächig auf den Elektronikträger 114 einzuwirken. Diese Aussparungen 234 ermöglichen es, dass auf dem Elektronikträger 114 in gewohnter Weise sowohl Leiterbahnen als auch elektronische Bauelemente 150 aufgebracht werden können.

Da die Schraubenköpfe 232 nunmehr auf dem Anpresselement 220 aufliegen, wird auf dem Elektronikträger 114 auch der Raum der ursprünglichen Verschraubungsbereiche 214 (vgl. Figur 5) freigegeben und kann nun für Leiterbahnen und elektronische Bauelemente 150 genutzt werden. Weiterhin bewirkt die Verlagerung der Schraubenköpfe 232 auf das Anpresselement 220, dass mechanische Spannungen und Biegemomente auf das Anpresselement 220 übertragen werden, wo diese jedoch, im Gegensatz zum Elektronikträger 114, unschädlich sind. Es sei darauf hingewiesen, dass anstelle der Schrauben 230 auch andere Arten von Verbindungselementen eingesetzt werden können, beispielsweise Stifte, Bolzen, Klammern oder Nieten, mittels derer das Anpresselement 220 mit dem Außengehäuse 120 verbunden werden kann. Bevorzugt ist die Verwendung von Schrauben 230 und/oder Stiften, insbesondere Gewindestiften.

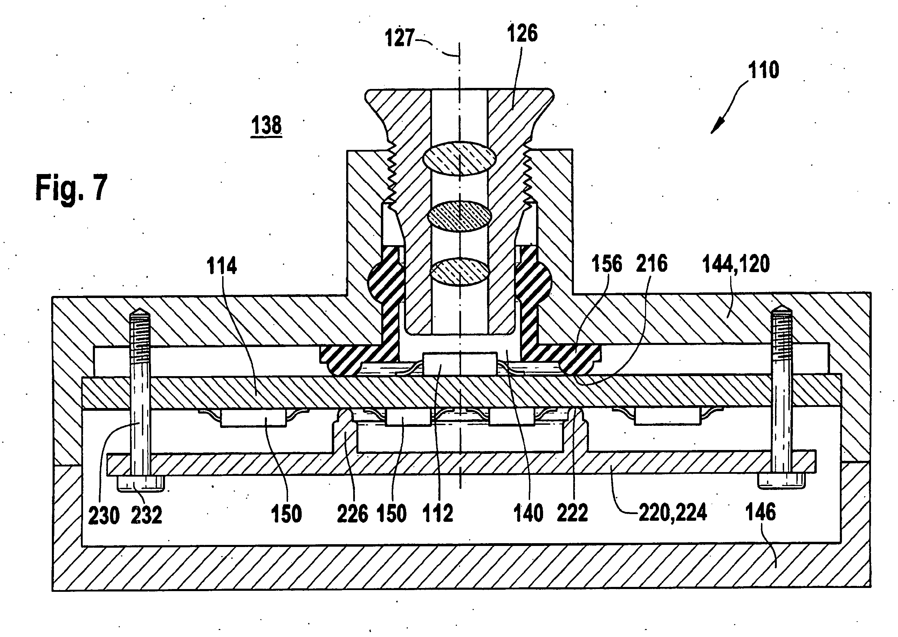

Das anhand von Figur 6 demonstrierte Prinzip lässt sich auch auf andere Ausführungsbeispiele der Kameraanordnung 110 übertragen. So ist in Figur 7 ein Ausführungsbeispiel dargestellt, bei welchem die Schrauben 230 soweit wie möglich von der optischen Achse 127 weg nach außen verlagert wurden. Auf diese Weise lässt sich zusätzlich freie Fläche auf dem Elektronikträger 114 zur Anordnung elektronischer Bauelemente 150 und von Leiterbahnen gewinnen. Es sei darauf hingewiesen, dass in diesem und in anderen Ausführungsbeispielen Leiterbahnen auch direkt unterhalb der Druckübertragungselemente 226 angeordnet werden können. Ansonsten ist im Ausführungsbeispiel gemäß Figur 7 das Anpresselement 220 wiederum analog zu Figur 6 als Ringbrücke 224 ausgebildet. Die Ringbrücke 224 gewährleistet eine gleichmäßige Anpressdruckverteilung über den gesamten Umfang der Ringbrücke 224 und somit eine gleichmäßige Anpressung an das Dichtungselement 156. Insbesondere dadurch ist bedingt, dass, im Gegensatz beispielsweise zur Ausgestaltung gemäß Figur 4, eine gute Abdichtung des Sensorraums 140 auch trotz eines großen Abstands zwischen Schrauben 230 und Dichtungselementen 156 gewährleistet werden kann. Somit kann nach wie vor das Dichtungselement 156 einstückig ausgebildet sein, ohne dass eine Durchbiegung des Elektronikträgers 114 stattfindet, da nach wie vor die Dichtbereiche 216 und die Kontaktbereiche 222 einander, trotz des großen Abstands zwischen Dichtungselement 156 und Schrauben 230, gegenüberliegen. Dies ist ein erheblicher konstruktiver Vorteil, da ein einzelnes Dichtungselement 156 einfacher zu montieren ist als mehrere Dichtungselemente.

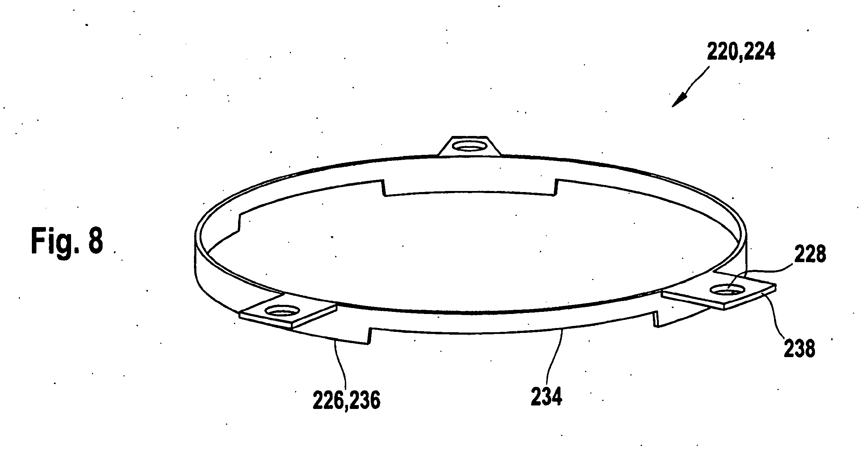

In Figur 8 ist ein Ausführungsbeispiel eines Anpresselements 220 in Form einer Ringbrücke 224 perspektivisch dargestellt. Die Ringbrücke 224 weist Druckübertragungselemente 226 in Form von Leiterplattenstützen 236 auf. Wie in Figur 8 dargestellt, müssen sich diese Leiterplattenstützen 236 auch nicht über den gesamten Umfang der Ringbrücke 224 erstrecken, so dass zusätzlich Raum für elektronische Bauelemente 150 und Leiterbahnen gewonnen wird. Dadurch ergeben sich im Inneren des Anpresselements 220 und zwischen den Leiterplattenstützen 236 Aussparungen 234. Somit ist bei dieser Ausgestaltung des Anpresselements 220 gemäß dem Beispiel in Figur 8 auch die Fläche der Kontaktbereiche 222 nicht exakt deckungsgleich zum Dichtbereich 216, da sich die Kontaktbereiche 222 in diesem Fall als unterbrochener Ring auf dem Elektronikträger 114 darstellen. Insgesamt mitteln sich jedoch die Biegemomente auf den Elektronikträger 114 aus.

Weiterhin weist die Ringbrücke 224 gemäß dem Ausführungsbeispiel in Figur 8 sich radial nach außen erstreckende Befestigungslaschen 238 auf. In diese Befestigungslaschen 238 sind die Bohrungen 228 für die Schrauben 230 eingelassen. Das gesamte Anpresselement 220 kann aus verschiedenen Materialien hergestellt sein. Beispielsweise können Kunststoffe eingesetzt werden, beispielsweise bei einer Ausgestaltung des Anpresselements 220 als Spritzgussbauteil. Auch andere Werkstoffe lassen sich verwenden, beispielsweise Metalle, beispielsweise Metallbleche in Form von Stanz-Biegeteilen. Auch Materialmischungen sind möglich. Neben dem in Figur 8 gezeigten Anpresselement 220 sind alternativ auch andere Formen von Anpresselementen 220 möglich, beispielsweise eckige Formen, z. B. Rechteck- oder Quadratformen.

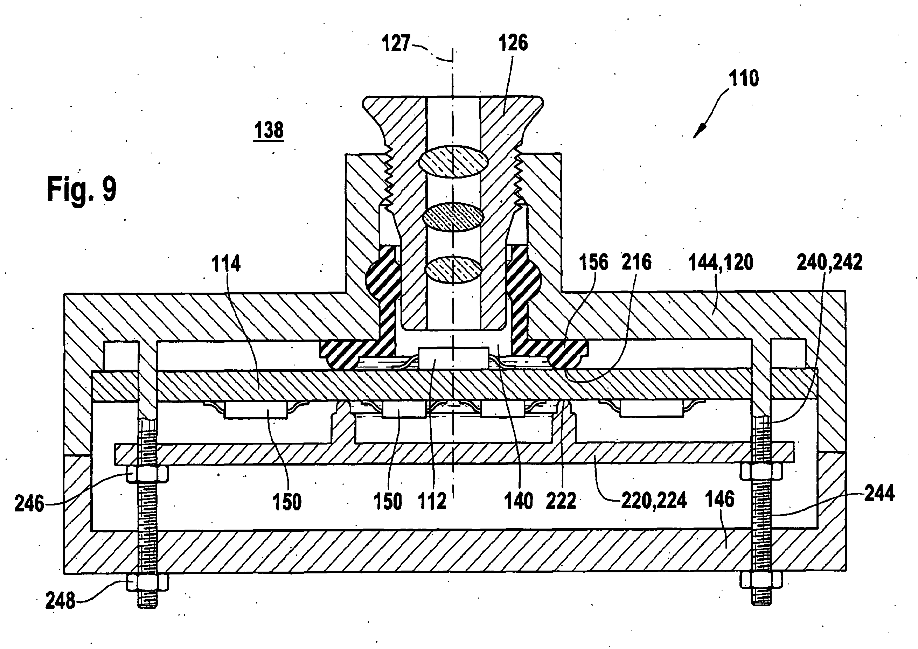

In Figur 9 ist ein weiteres Ausführungsbeispiel dargestellt, bei welchem Befestigungselemente 240 eingesetzt werden, welche gleichzeitig das Anpresselement 220 mit der optikseitigen Gehäusehalbschale 144 verbinden und die beiden Gehäusehalbschalen 144, 146 gegeneinander fixieren. Zu diesem Zweck werden anstelle der Schrauben 230 (siehe Figur 7) als Verbindungselemente 240 mit der optikseitigen Gehäusehalbschale 144 fest verbundene Stifte 242 eingesetzt, welche in ihrem vorderen Bereich ein Gewinde 244 aufweisen. Diese Stifte durchsetzen sowohl den Elektronikträger 114 als auch das Anpresselement 220, so dass dieses Ausführungsbeispiel diesbezüglich im Wesentlichen ausgestaltet ist wie das Ausführungsbeispiel gemäß Figur 7. Zusätzlich durchsetzen die Stifte 242 jedoch auch die steckerseitige Gehäusehalbschale 146. Bei der Montage wird somit zunächst der Elektronikträger 114 auf die Stifte 242 aufgesetzt, anschließend das Anpresselement 220 und schließlich die steckerseitige Gehäusehalbschale 146. Vor Aufsetzen der steckerseitigen Gehäusehalbschale 146 wird das Anpresselement 220 durch Muttern 246 fixiert und gegen die optikseitige Gehäusehalbschale 144 gepresst. Nach Aufsetzen der steckerseitigen Gehäusehalbschale 146 kann auch diese durch entsprechende Muttern 248 fixiert werden. Auf diese Weise lässt sich nicht nur das erfindungsgemäße Prinzip des Anpresselements 220 verwirklichen, sondern es ist auch eine einfache und kostengünstige Montage gewährleistet. Insgesamt stellt sich der Montagevorgang also so dar, dass zunächst das Dichtungselement 156 in die optikseitige Gehäusehalbschale 144 eingesetzt wird. Anschließend wird die Bildgebungsoptik 126 in die optikseitige Gehäusehalbschale 144 eingeschraubt. Dann wird der Elektronikträger 114 auf die Stifte 242 aufgesetzt und gegebenenfalls justiert. Es kann hier eine zusätzliche, insbesondere laterale, Fixierung des Elektronikträgers 114 erfolgen, beispielsweise durch Verkleben oder Klemmen. Anschließend wird das Anpresselement 220 auf die Stifte 242 aufgesteckt, durch die Muttern 246 fixiert und schließlich die steckerseitige Gehäusehalbschale 146 aufgesteckt und ebenfalls fixiert.

## Patentansprüche

1. Kameraanordnung (110) mit einem Außengehäuse (120; 142) und einem auf einem Elektronikträger (114) aufgebrachten Bildsensor (112), wobei das Außengehäuse (120; 142) einen Optikabschnitt (122) mit mindestens einer in den Optikabschnitt (122) eingebrachten Bildgebungsoptik (126) aufweist, wobei der Objektabschnitt (122) mediendicht gegen den Elektronikträger (114) abdichtet, wobei ein den Bildsensor (112) aufnehmender, mediendichter Sensorraum (140) ausgebildet ist, und mit mindestens einem Anpresselement (220), wobei das mindestens eine Anpresselement (220) auf der rückseitigen, der mindestens einen Bildgebungsoptik (126) abgewandte Seite (212) des Elektronikträgers (114) angeordnet ist und wobei das mindestens eine Anpresselement (220) derart mit dem Außengehäuse (120; 142) verbunden ist, dass das mindestens eine Anpresselement (220) rückseitig gegen den Elektronikträger (114) gepresst wird, wobei das mindestens eine Anpresselement (220) über mindestens eine Schraube (230) mit dem Außengehäuse (120; 142) verbunden ist, wobei die mindestens eine Schraube (230) den Elektronikträger (114) durchdringt.

2. Kameraanordnung (110) gemäß dem vorhergehenden Anspruch, **gekennzeichnet durch** mindestens ein zwischen dem Optikabschnitt (122) und dem Elektronikträger (114) angeordnetes Sensordichtungselement (134) zur mediendichten Abdichtung des Sensorraums (140).

3. Kameraanordnung (110) gemäß einem der beiden vorhergehenden Ansprüche, **dadurch gekennzeichnet, dass** der Elektronikträger (114) mittels mindestens eines mechanischen Verbindungselements (136; 148) mechanisch fest mit dem Außengehäuse (120; 142), insbesondere mit dem Optikabschnitt (122), verbunden ist.

4. Kameraanordnung (110) gemäß dem vorhergehenden Anspruch, **dadurch gekennzeichnet, dass** die mechanisch feste Verbindung durch Schraubenelemente (136; 148) erfolgt.

5. Kameraanordnung (110) gemäß dem vorhergehenden Anspruch, **dadurch gekennzeichnet, dass** die Schraubenelemente (136; 148) außerhalb des Sensorraums (140) angeordnet sind.

6. Kameraanordnung (110) gemäß einem der beiden vorhergehenden Ansprüche, **dadurch gekennzeichnet, dass** drei Schraubenelemente (136; 148) in einer 120°-Anordnung vorgesehen sind, wobei mittels der der Schraubenelemente (136; 148) Taumeltoleranzen zwischen der Bildgebungsoptik (126) und dem Bildsensor (112) ausgleichbar sind

7. Kameraanordnung (110) gemäß einem der vorhergehenden Ansprüche, **dadurch gekennzeichnet, dass** der Optikabschnitt (122) halbschalenartig ausgebildet ist, wobei eine Öffnung der Halbschale dem Elektronikträger (114) zuweist.

8. Kameraanordnung (110) gemäß einem der vorhergehenden Ansprüche, **gekennzeichnet durch** mindestens ein Optikdichtungselement (130) zur Abdichtung zwischen dem Optikabschnitt (122) und der in den Optikabschnitt (122) eingebrachten Bildgebungsoptik (126).

9. Kameraanordnung (110) gemäß dem vorhergehenden Anspruch, **dadurch gekennzeichnet, dass** das mindestens eine Optikdichtungselement (130) die Bildgebungsoptik (126) relativ zum Bildsensor (112) fixiert.

10. Kameraanordnung (110) gemäß dem vorhergehenden Anspruch, **dadurch gekennzeichnet, dass** die Bildgebungsoptik (126) durch Aufbringen eines Drehmomentes fokussierbar ist.

11. Kameraanordnung (110) gemäß einem der vorhergehenden Ansprüche, **gekennzeichnet durch** ein zwischen dem Optikabschnitt (122) und dem Elektronikträger (114) angeordnetes Sensordichtungselement (134) zur mediendichten Abdichtung zwischen Optikabschnitt (122) und Elektronikträger (114) und ein Optikdichtungselement (130) zur Abdichtung zwischen dem Optikabschnitt (122) und der in den Optikabschnitt (122) eingebrachten Bildgebungsoptik (126), wobei Sensordichtungselement (134) und Optikdichtungselement (130) als einstükkiges Dichtungselement (156) ausgebildet sind.

12. Kameraanordnung (110) gemäß dem vorhergehenden Anspruch, **dadurch gekennzeichnet, dass** das Dichtungselement (156) einen rechtwinklig ausgestalteten Dichtungskörper (158), mindestens einen ersten Dichtungsbereich (160) zur Abdichtung zwischen dem Optikabschnitt (122) und Elektronikträger (114) und mindestens einen zweiten Dichtungsbereich (162) zur Abdichtung zwischen Optikabschnitt (122) und Bildgebungsoptik (126) aufweist.

13. Kameraanordnung (110) gemäß einem der vorhergehenden Ansprüche, **dadurch gekennzeichnet, dass** die Abdichtung des Optikabschnitts (122) gegen den Elektronikträger (114) klebstofffrei erfolgt.

14. Kameraanordnung (110) gemäß einem der vorhergehenden Ansprüche, **dadurch gekennzeichnet, dass** der Optikabschnitt (122) klebstofffrei mediendicht gegen die Bildgebungsoptik (126) abgedichtet ist.

15. Kameraanordnung (110) gemäß einem der vorhergehenden Ansprüche, **dadurch gekennzeichnet, dass** das mindestens eine Anpresselement (220) derart gegen den Elektronikträger (114) gepresst wird, dass minimale, insbesondere verschwindende, Biegemomente auf den Elektronikträger (114) ausgeübt werden.

16. Kameraanordnung (110) gemäß dem vorhergehenden Anspruch, **dadurch gekennzeichnet, dass** das mindestens eine Anpresselement (220) mindestens ein Druckübertragungselement (226) aufweist, wobei mittels des mindestens einen Druckübertragungselements (226) Druck auf den Elektronikträger (114) übertragen wird in Bereichen (222) des Elektronikträgers (114), in denen auf der gegenüberliegenden, der mindestens einen Bildgebungsoptik (126) zugewandten Seite (218) des Elektronikträgers (114) ein Gegendruck von dem Außengehäuse (120; 142) auf den Elektronikträger (114) übertragen wird.

17. Kameraanordnung (110) gemäß dem vorhergehenden Anspruch, **dadurch gekennzeichnet, dass** zwischen dem Optikabschnitt (122) und dem Elektronikträger (114) ein Sensordichtungselement (156) zur mediendichten Abdichtung des Sensorraums (140) vorgesehen ist, insbesondere ein ringförmiges Sensordichtungselement (134), wobei das Sensordichtungselement (134) einen Dichtbereich (216) mit der der mindestens einen Bildgebungsoptik (126) zugewandten Seite (218) des Elektronikträgers (114) aufweist, wobei das mindestens eine Anpresselement (220) Druck auf den dem Dichtbereich (216) auf der der mindestens einen Bildgebungsoptik (126) abgewandten Seite (212) des Elektronikträgers (114) gegenüberliegenden Seite ausübt.

18. Kameraanordnung (110) gemäß einem dervorhergehenden Ansprüche, **dadurch gekennzeichnet, dass** das mindestens eine Anpresselement (220) mindestens eine Ringbrücke (224) aufweist.

19. Kameraanordnung (110) gemäß einem der vorhergehenden Ansprüche, **dadurch gekennzeichnet, dass** das mindestens eine Anpresselement (220) mindestens eine dem Elektronikträger (114) zugewandte Aussparung (234) aufweist.

## Claims

1. Camera arrangement (110) having an outer housing (120; 142) and an image sensor (112) fixed on an electronics carrier (114), the outer housing (120; 142) having an optics section (122) with at least one imaging optics (126) inserted into the optics section (122), the optics section (122) being sealed off in a media leak-proof fashion from the electronics carrier (114), a media leak-proof sensor space (140) holding the image sensor (112) being formed, and having at least one contact-pressure element (220), the at least one contact-pressure element (220) being arranged on the rear side (212), averted from the at least one imaging optics (126), of the electronics carrier (114), and the at least one contact-pressure element (220) being connected to the outer housing (120; 142) in such a way that the at least one contact-pressure element (220) is pressed at the rear side against the electronics carrier (114), the at least one contact-pressure element (220) being connected to the outer housing (120; 142) via at least one screw (230), the at least one screw (230) penetrating the electronics carrier (114).

2. Camera arrangement (110) according to the preceding claim, **characterized by** at least one sensor sealing element (134) that serves to seal off the sensor space (140) in a media leak-proof fashion and is arranged between the optics section (122) and the electronics carrier (114) .

3. Camera arrangement (110) according to one of the two preceding claims, **characterized in that** the electronics carrier (114) is firmly connected mechanically to the outer housing (120; 142), in particular to the optics section (122), by means of at least one mechanical connecting element (136; 148).

4. Camera arrangement (110) according to the preceding claim, **characterized in that** the mechanically firm connection is made by screw elements (136; 148).

5. Camera arrangement (110) according to the preceding claim, **characterized in that** the screw elements (136; 148) are arranged outside the sensor space (140).

6. Camera arrangement (110) according to one of the two preceding claims, **characterized in that** three screw elements (136; 148) are provided in a 120° arrangement, it being possible to compensate wobble tolerances between the imaging optics (126) and the image sensor (112) by means of the screw elements (136; 148).

7. Camera arrangement (110) according to one of the preceding claims, **characterized in that** the optics section (122) is of half-shell design, an opening of the half shell being assigned to the electronics carrier (114).

8. Camera arrangement (110) according to one of the preceding claims, **characterized by** at least one optics sealing element (130) for providing sealing between the optics section (122) and the imaging optics (126) inserted into the optics section (122).

9. Camera arrangement (110) according to the preceding claim, **characterized in that** the at least one optics sealing element (130) fixes the imaging optics (126) relative to the image sensor (112).

10. Camera arrangement (110) according to the preceding claim, **characterized in that** the imaging optics (126) can be focused by applying a torque.

11. Camera arrangement (110) according to one of the preceding claims, **characterized by** a sensor sealing element (134), arranged between the optics section (122) and the electronics carrier (114), for providing media leak-proof sealing between the optics section (122) and electronics carrier (114), and an optics sealing element (130) for providing sealing between the optics section (122) and the imaging optics (126) inserted into the optics section (122), the sensor sealing element (134) and optics sealing element (130) being designed as a unipartite sealing element (156).

12. Camera arrangement (110) according to the preceding claim, **characterized in that** the sealing element (156) has a rectangularly configured sealing member (158), at least a first sealing region (160) for providing sealing between the optics section (122) and electronics carrier (114) and at least a second sealing region (162) for providing sealing between the optics section (122) and imaging optics (126).

13. Camera arrangement (110) according to one of the preceding claims, **characterized in that** the optics section (122) is sealed off from the electronics carrier (114) without adhesive.

14. Camera arrangement (110) according to one of the preceding claims, **characterized in that** the optics section (122) is sealed off from the imaging optics (126) without adhesive in a media leak-proof fashion.

15. Camera arrangement (110) according to one of the preceding claims, **characterized in that** the at least one contact-pressure element (220) is pressed against the electronics carrier (114) in such a way that minimal, in particular vanishing, bending moments are exerted on the electronics carrier (114).

16. Camera arrangement (110) according to the preceding claim, **characterized in that** the at least one contact-pressure element (220) has at least one pressure transmission element (226), the at least one pressure transmission element (226) being used to transmit pressure onto the electronics carrier (114) in regions (222) of the electronics carrier (114) in which a back pressure is transmitted on the opposite side (218), facing the at least one imaging optics (126), of the electronics carrier (114) from the outer housing (120; 142) onto the electronics carrier (114).

17. Camera arrangement (110) according to the preceding claim, **characterized in that** a sensor sealing element (156) for providing media leak-proof sealing of the sensor space (140), in particular an annular sensor sealing element (134), is provided between the optics section (122) and the electronics carrier (114), the sensor sealing element (134) having a sealing region (216) with that side (218) of the electronics carrier (114) which faces the at least one imaging optics (126), the at least one contact-pressure element (220) exerting pressure on the side opposite the sealing region (216) on that side (212) of the electronics carrier (114) averted from the at least one imaging optics (126).

18. Camera arrangement (110) according to one of the preceding claims, **characterized in that** the at least one contact-pressure element (220) has at least one annular bridge (224).

19. Camera arrangement (110) according to one of the preceding claims, **characterized in that** the at least one contact-pressure element (220) has at least one cutout (234) facing the electronics carrier (114).

## Revendications

1. Système de caméra (110) comportant un boîtier extérieur (120; 142) et un capteur d'image (112) installé sur un support de circuit électronique (114),
le boîtier extérieur (120; 142) comportant un segment optique (122) avec au moins une optique d'imagerie (126) intégrée dans le segment optique (122),
le segment optique (122) étant rendu étanche par rapport au support de circuit électronique (114) du point de vue des fluides,
une chambre de capteur (140) étanche vis-à-vis des fluides, recevant le capteur d'images (112), étant configure, et comportant au moins un élément de compression (220), l'au moins un élément de compression (220) étant prévu sur le côté arrière (212) du support de circuit électronique (114) non tourné vers l'au moins une optique d'imagerie (126) et
l'au moins un élément de compression (220) étant relié au boîtier extérieur (120 ; 142) de telle sorte que l'au moins un élément de compression (220) soit pressé du côté arrière contre le support de circuit électronique (114), l'au moins un élément de compression (220) étant relié par au moins une vis (230) au boîtier extérieur (120 ; 142), l'au moins une vis (230) traversant le support de circuit électronique (114).

2. Système de caméra (110) selon la revendication précédente,
**caractérisé par**
au moins un élément d'étanchéité de capteur (134) installé entre le segment optique (122) et le support de circuit électronique (114) pour assurer l'étanchéité de la chambre de capteur (140) vis-à-vis des fluides.

3. Système de caméra (110) selon l'une des deux revendications précédentes,
**caractérisé en ce que**
le support de circuit électronique (114) est relié mécaniquement de manière solidaire par l'intermédiaire d'au moins un élément de liaison mécanique (136 ; 148) au boîtier extérieur (120 ; 142) et notamment au segment optique (122).

4. Système de caméra (110) selon la revendication précédente,
**caractérisé en ce que**
la liaison mécaniquement solidaire est réalisée par des éléments de vissage (136 ; 148).

5. Système de caméra (110) selon la revendication précédente,
**caractérisé en ce que**
les éléments de vissage (136 ; 148) sont prévus à l'extérieur de la chambre de capteur (140).

6. Système de caméra (110) selon l'une des deux revendications précédentes,
**caractérisé par**
trois éléments de vissage (136 ; 148) répartis suivant une répartition angulaire à 120° et, à l'aide des éléments de vissage (136 ; 148), on compense les tolérances de nutation entre l'optique d'imagerie (126) et le capteur d'image (112).

7. Système de caméra (110) selon l'une des revendications précédentes,
**caractérisé en ce que**
le segment optique (122) est en forme de demi-coquille, une ouverture de la demi-coquille étant tournée vers le support de circuit électronique (114).

8. Système de caméra (110) selon l'une des revendications précédentes,
**caractérisé par**
au moins un élément d'étanchéité optique (130) pour assurer l'étanchéité entre le segment optique (122) et l'optique d'imagerie (126) intégrée dans le segment optique (122).

9. Système de caméra (110) selon l'une des revendications précédentes,
**caractérisé en ce que**
l'au moins un élément d'étanchéité optique (130) fixe l'optique d'imagerie (126) par rapport au capteur d'image (112).

10. Système de caméra (110) selon l'une des caractéristiques précédentes,
**caractérisé en ce que**
l'optique d'imagerie (126) est focalisée par l'application d'un couple.

11. Système de caméra (110) selon l'une des revendications précédentes,
**caractérisé par**
un élément d'étanchéité de capteur (134) prévu entre le segment optique (122) et le support de circuit électronique (114) pour assurer l'étanchéité vis-à-vis des fluides entre le segment optique (122) et le support de circuit électronique (114) ainsi qu'un élément d'étanchéité optique (130) pour assurer l'étanchéité entre le segment optique (122) et l'optique d'imagerie (126) installée dans le segment optique (122), l'élément d'étanchéité de capteur (134) et l'élément d'étanchéité optique (130) étant réalisés sous la forme d'un élément d'étanchéité (156) en une seule partie.

12. Système de caméra (110) selon l'une des revendications précédentes,
**caractérisé en ce que**
l'élément d'étanchéité (156) comporte un organe d'étanchéité (158) de forme rectangulaire ayant au moins une première zone d'étanchéité (160) pour réaliser l'étanchéité entre le segment optique (122) et le support de circuit électronique (114) et au moins une seconde zone d'étanchéité (162) pour assurer l'étanchéité entre le segment d'isolation optique (122) et l'optique d'imagerie (126).

13. Système de caméra (110) selon l'une des revendications précédentes,
**caractérisé en ce que**
l'étanchéité du segment optique (122) vis-à-vis du support de circuit électronique (114) est réalisée sans utiliser de colle.

14. Système de caméra (110) selon l'une des revendications précédentes,
**caractérisé en ce que**
le segment d'isolation optique (122) est rendu étanche vis-à-vis des fluides, sans utiliser de colle, par rapport à l'optique d'imagerie (126).

15. Système de caméra (110) selon l'une des revendications précédentes,
**caractérisé en ce que**
l'au moins un élément de compression (220) est pressé contre le support de circuit électronique (114) pour exercer des couples de flexion minimum, notamment évanescents sur le support de circuit électronique (114).

16. Système de caméra (110) selon l'une des revendications précédentes,
**caractérisé en ce que**
l'au moins un élément de compression (220) comporte au moins un élément de transmission de pression (226),
à l'aide de l'au moins un élément de transmission de compression (226), une pression étant transmise au support de circuit électronique (114) dans les zones (222) du support de circuit électronique (114) dans lesquelles, sur le côté (218) du support de circuit électronique (114) à l'opposé, tourné vers l'au moins une optique d'imagerie (126), une contre-pression est exercée par le boîtier extérieur (120 ; 142) sur le support de circuit électronique (114).

17. Système de caméra (110) selon l'une des revendications précédentes,
**caractérisé en ce que** un élément d'étanchéité de capteur (156) est prévu entre le segment optique (122) et le support de circuit électronique (114) pour assurer l'étanchéité de la chambre de capteur (140) vis-à-vis des fluides, notamment un élément d'étanchéité de capteur (134) de forme annulaire,
l'élément d'étanchéité de capteur (134) comportant une zone d'étanchéité (216) avec le côté (218) du support de circuit électronique (114) tourné vers l'au moins une optique d'imagerie (126), l'au moins un élément de compression (220) exerçant une pression sur le côté oppose à la zone d'étanchéité (216) sur le côté (212) du support de circuit électronique (114) opposé à l'au moins une optique d'imagerie (126).

18. Système de caméra (110) selon l'une des revendications précédentes,
**caractérisé en ce que** l'au moins un élément de compression (220) comporte au moins un pont annulaire (224) .

19. Système de caméra (110) selon l'une des revendications précédentes,
**caractérisé en ce que** l'au moins un élément de compression (220) comporte au moins une découpe (234) tournée vers le support de circuit électronique (114).
